## Europäisches Patentamt
## European Patent Office
## Office européen des brevets

(19)

(11) Veröffentlichungsnummer: **0 032 216**
**B1**

(12) # EUROPÄISCHE PATENTSCHRIFT

(45) Veröffentlichungstag der Patentschrift:
**16.03.83**

(51) Int. Cl.³: **C 09 D 11/00**

(21) Anmeldenummer: **80107924.5**

(22) Anmeldetag: **15.12.80**

(54) **Färbe- und Aufzeichnungsmittel.**

(30) Priorität: **27.12.79 DE 2952414**

(43) Veröffentlichungstag der Anmeldung:
**22.07.81 Patentblatt 81/29**

(45) Bekanntmachung des Hinweises auf die Patenterteilung:
**16.03.83 Patentblatt 83/11**

(84) Benannte Vertragsstaaten:
**CH FR GB IT LI NL SE**

(56) Entgegenhaltungen:
**FR-A-2 411 870**

(73) Patentinhaber: **SIEMENS AKTIENGESELLSCHAFT,
Berlin und München Wittelsbacherplatz 2,
D-8000 München 2 (DE)**

(72) Erfinder: **Tussing, Reinhold, Buchenstrasse 8,
D-8621 Redwitz (DE)**

EP 0 032 216 B1

Färbe- und Aufzeichnungsmittel

Die Erfindung betrifft Färbe- und Aufzeichnungsmittel enthaltend die Lösung eines Farbstoffes in einem flüssigen Medium, das entweder vollständig oder überwiegend aus einem oder mehreren organischen Lösungsmitteln besteht.

Es sind Färbemittel, beispielsweise schwarze Tinte, mit einem Farbstoffgehalt von ∼ 2,4 Gew.%, bezogen auf Lösung bekannt, mit denen Farbkontraste mit einem PCS-Wert von ∼ 0,6 erzielt werden können. Eine Vertiefung der Farbe durch Erhöhung des Farbstoffgehaltes ist vielfach aufgrund der Löslichkeitsverhältnisse des Farbstoffes nicht möglich. Im Farbstoff sind im allgemeinen bei der Herstellung anfallende Salze und die «Stellmittel» wie Soda, Natriumsulfat und Natriumchlorid vorhanden. Bei Verwendung von ungestellten bzw. reinem Farbstoff kann zwar eine Farbstoffkonzentration von ca. 5% erreicht werden. Die Lösungen solcher Farbstoffe in Medien mit überwiegend organischen Lösungsmitteln verhalten sich aber Metallen gegenüber sehr aggressiv und greifen z.B. Reinnickel an. Mit überwiegend wässrigen Medien sind die Trocknungszeiten zu lange.

Es ist ferner bekannt, dass durch Zusatz von alkalisch wirkenden Lösungsvermittlern wie Aminen, beispielsweise Morpholin, Isophorondiamin, Pyridin und Alkoholaminen wie z.B. Äthanolaminen, Dimethylaminoäthanol, eine Erhöhung der Konzentration des Farbstoffes in der Farbstofflösung bis zu 15 Gew.% erreicht werden kann. Die Korrosion wird aber durch solche Zusätze nicht verhindert. Ausserdem haben viele der zugesetzten Amine und Alkoholamine einen stark unangenehmen Geruch, der auf das zu färbende Material übergeht und sich auch aus Fasern erst nach längerer Zeit verflüchtigt.

Aufgabe der Erfindung sind kontrastreiche Färbe- und Aufzeichnungsmittel, die gut benetzen und ohne Geruchsbelästigung schnell trocknen. Gleichzeitig sollen die metallischen Teile der Verarbeitungsgeräte nicht angegriffen werden.

Diese Aufgabe wird gelöst mit Färbe- und Aufzeichnungsmitteln, die erfindungsgemäss 0,5 bis 20 Gew.%, bezogen auf Farbstoff eines Alkalialkoholats enthalten. Als besonders wirksam erwiesen sich Zusätze von 0,5 bis 20 Gew.% des Natrium- oder Kaliumsalzes des tert. Butanols. Es wird hiermit eine Farbstoffkonzentration von über 12% und eine völlige Korrosionsfreiheit ohne Geruchsbelästigung erzielt. Das Schriftbild ist deutlich sichtbar kontrastreicher und wischfest. Die PCS-Werte liegen bei > 0,8. Die erfindungsgemässen Farbmittel greifen Metalle in den Verarbeitungsanlagen nicht an, trocknen in den Verarbeitungsanlagen nicht ein und sind auf Substraten wie Cellulose (Papier), Leder u. dgl. sofort wischfest.

Mit den erfindungsgemässen Färbe- und Aufzeichnungsmitteln können Aufzeichnungen und Informationen auf fast beliebigen Oberflächen in Form von Strichen, Marken, alphanumerischen Zeichen oder Bildern nach beliebigen Verfahren z.B. mit Faserschreibern oder auch nach dem Ink.Jet.-Verfahren (Tintenspritz-Verfahren) erfolgen, wobei entweder der Aufzeichnungsträger oder der Aufzeichner die Düse bewegt werden kann.

Bei den Aufzeichnungsträgern kann es sich um Papier, textilen Geweben aus Cellulose oder Wolle oder auch hydrophilen Polymeren wie Polyamiden, Gelatine und ähnliche handeln.

Geeignete Farbstoffe sind substantive Farbstoffe, z.B. Azofarbstoffe oder Farbstoffe auf Triphenylmethanbasis. Aufgrund ihres Molekülaufbaus – den aromatischen Ringen, die sich in einer Ebene ausrichten können, Hydroxyl- und/oder Aminogruppen, welche Wasserstoffbrücken bilden und wenige wasserlöslich machende Gruppen wie Sulfon- und/oder Carboxylgruppen bzw. deren Salze – sind sie in den vorzugsweise eingesetzten Lösungsmittelgemischen bestehend aus Alkoholen, Glykoläthern und Glykolen mit Dimethylsulfoxid löslich. Sie ziehen ohne Fixiermittel auf Fasern auf und besitzen eine hohe Ausblutechtheit. Von den Farbstoffen können in den erfindungsgemässen Färbe- und Aufzeichnungsmitteln 5 bis 15 Gew.%, bezogen auf Lösung vorhanden sein.

Als Lösungsmittel finden meist Gemische zweier oder mehrerer miteinander mischbarer Lösungsmittel Anwendung. Geeignete Lösungsmittel sind beispielsweise Diole wie Butandiol, Glykoläther wie Methyldiglykol, Glykole wie Diäthylenglykol und Alkoholate wie Methoxybutanol. Sie enthalten vorzugsweise einen Zusatz von Dimethylsulfoxid. Ein Zusatz von Wasser kann insbesondere im Hinblick auf die Erhöhung der Löslichkeit zweckmässig sein.

Ferner können die erfindungsgemässen Färbe- und Aufzeichnungsmittel, wenn erforderlich, Verdickungs- und filmbildende Mittel enthalten.

Die erfindungsgemässen Färbe- und Aufzeichnungsmittel haben sich zum Färben und Bedrucken von Fasern mit Hydroxyl- und/oder Amingruppen, beispielsweise Cellulose oder Leder besonders bewährt. Sie werden mit besonderem Vorteil in Schreibeinrichtungen, beispielsweise im Tintenmosaikdrucker und Spritzschreibern eingesetzt.

Beispiele für geeignete Färbe- und Aufzeichnungsmittel sind in den folgenden Beispielen angeführt.

Zur Durchführung des Korrosionstestes werden je 15 ml der verschiedenen erfindungsgemässen Aufzeichnungsflüssigkeiten verglichen:

1 = Unverändert nicht sichtbar
2 = Punktförmige Korrosion gering < 10%
3 = Punktförmige Korrosion stark > 10%
4 = Flächenförmige Korrosion gering < 10%
5 = Flächenförmige Korrosion stark > 10%
6 = Farbig, z.B. schwarz angelaufen

Für die Durchführung der Beispiele werden jeweils in einem mit einem mechanischen Rührer versehenen Behälter bei Zimmertemperatur gemischt gemäss:

**Beispiel 1**

| Als Lösungsmittel: | 2 Gewichtsteile Diäthylenglykol 1 Gewichtsteil Dimethylsulfoxid |
|---|---|
| Als Farbstoff: | Substantiv, schwarz, 6% |
| Als Zusatzmittel: | 5 Gew.% Kalium tert.butylat bezogen auf Farbstoff |
| Abtrag μm bei 70°C: | 1. Woche = 0, 3. Woche = 0 |
| Visuell bei 70°C: | 1 |

**Beispiel 2**

| Lösungsmittel: | Wie in Beispiel 1 |
|---|---|
| Farbstoff: | Substantiv, schwarz 12% |
| Zusatzmittel: | Kalium tert.butylat 15% |
| Abtrag μm bei70°C: | 1. Woche = 0, 2. Woche = 0 |
| Visuell bei 70°C: | 1 |

**Beispiel 3**

| Lösungsmittel: | Wie in Beispiel 1 |
|---|---|
| Farbstoff: | Substantiv, schwarz 12% |
| Zusatzmittel: | Natriumsalz des Diäthylenglykols 7% |
| Abtrag μm bei 70°C: | 1. Woche = 0, 3. Woche = 0 |
| Visuell bei 70°C: | 1 |

**Beispiel 4**

| Lösungsmittel: | 1 Gewichtsteil Diäthylenglykol 1 Gewichtsteil Dimethylsulfoxid 1 Gewichtsteil Methyldiglykol |
|---|---|
| Farbstoff: | Substantiv, schwarz 6,3% |
| Zusatzmittel: | Kalium tert.butylat 17% |
| Abtrag μm bei 70°C: | 1. Woche = 0, 3. Woche = 0 |
| Visuell bei 70°C: | 1 |

**Beispiel 5**

| Lösungsmittel: | 1 Gewichtsteil Diäthylenglykol 1 Gewichtsteil Dimethylsulfoxid 1 Gewichtsteil Methoxybutanol |
|---|---|
| Farbstoff: | Substantiv, schwarz 10% |
| Zusatzmittel: | Kalium tert.butylat 12% |
| Abtrag μm bei 70°C: | 1. Woche = 0, 3. Woche = 0 |
| Visuell bei 70°C: | 0 |

Die im Vergleich dazu mit Morpholin, Triäthanolamin und Anilin erhaltenen wesentlich schlechteren Werte für die Abtragung und die visuelle Beurteilung sind aus der folgenden Tabelle ersichtlich:

| Zusatzmittel | Lagerung bei 70°C | | |
|---|---|---|---|
| | Abtrag | | visuelle |
| | 1. Woche | 3. Woche | Beurteilung |
| 7% Morpholin | 5 μ | 8 μ | 5/6 |
| 9% Morpholin | 5 μ | 20 μ | 5/6 |
| 12% Triäthyl-amin | 8 μ | 10μ | 5/6 |
| 14% Triäthyl-amin | 5 μ | 12 μ | 5/6 |
| 16% Triäthyl-amin | 2 μ | 15 μ | 5/6 |
| 9% Anilin | 12 μ | | 5/6 |

Zusatz bezogen auf eine ~6%ige Farbstofflösung.

**Patentansprüche**

1. Färbe- und Aufzeichnungsmittel bestehend aus einer Lösung eines Farbstoffes in einem flüssigen Medium, das entweder vollständig oder überwiegend aus einem oder mehreren organischen Lösungsmitteln besteht, dadurch gekennzeichnet, dass sie 0,5 bis 20 Gew.%, bezogen auf Farbstoff, eines Alkalialkoholats enthalten.

2. Färbe- und Aufzeichnungsmittel nach Anspruch 1, dadurch gekennzeichnet, dass sie 0,5 bis 20 Gew.%, bezogen auf Farbstoff, des Natriumoder Kaliumsalzes eines Alkohols enthalten.

3. Färbe- und Aufzeichnungsmittel nach Anspruch 1, dadurch gekennzeichnet, dass sie 0,5 bis 20 Gew.%, bezogen auf Farbstoff, Kalium tert. butylat enthalten.

4. Verwendung der Färbe- und Aufzeichnungsmittel nach den Ansprüchen 1 bis 3 zum Beschreiben, Bedrucken und Färben von Substraten aus Cellulose, Polyamid oder Leder, insbesondere Papier.

5. Verwendung nach Anspruch 4 in Spritzschreibern.

**Claims**

1. Colouring and recording means consisting of a solution of a dyestuff in a liquid medium which consists, either completely or predominantly, of one or more organic solvents, characterised in that they contain 0.5 to 20% by weight, referred to the dyestuff, of an alkali alcoholate.

2. Colouring and recording means according to Claim 1, characterised in that they contain 0.5 to 20% by weight, referred to the dyestuff, of the sodium salt or potassium salt of an alcohol.

3. Colouring and recording means according to Claim 1, characterised in that they contain 0.5 to 20% by weight, referred to the dyestuff, of potassium tertbutylate.

4. The use of the dyeing and recording means according to one of Claims 1 to 3, for writing-on, printing-on and colouring substrates which consist of cellulose, polyamide or leather in particular of paper.

5. The use according to Claim 4 in spray-recording apparatus.

**Revendications**

1. Agents colorants et/ou pour réaliser des tracés, constitués d'une solution de substance colorante dans un milieu liquide, qui est constitué entièrement ou principalement d'un ou de plusieurs solvants organiques, caractérisés en ce qu'ils contiennent un alcoolate de métal alcalin, à raison de 0,5 à 20% en poids par rapport à la substance colorante.

2. Agents colorants et/ou pour réaliser des tracés suivant la revendication 1, caractérisés en ce qu'ils contiennent un sel de sodium ou de potassium d'un alcool à raison de 0,5 à 20% en poids par rapport à la substance colorante.

3. Agents colorants et/ou pour réaliser des tracés suivant la revendication 1, caractérisés en ce qu'ils contiennent du butylate tertiaire de potassium à raison de 0,5 à 20% en poids par rapport à la substance colorante.

4. Utilisation des agents colorants et/ou pour réaliser des tracés suivant les revendications 1 à 3, pour écrire sur des substrats en cellulose, en polyamide ou en cuir, notamment en papier, pour imprimer et pour colorer ces substrats.

5. Utilisation suivant la revendication 4 dans des imprimantes à projection.